(19) Europäisches Patentamt
European Patent Office
Office européen des brevets

(11) **EP 1 319 899 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(51) Int Cl.:
***F24D 11/00*** *(2006.01)*

(21) Anmeldenummer: **02027715.8**

(22) Anmeldetag: **11.12.2002**

(54) **Verfahren zum optimierten Betrieb einer Anlage zur gleichzeitigen Erzeugung von elektrischer und thermischer Energie mit einem Brennstoffzellenheizgerät**

Method for optimizing a cogenerating system with a fuel cell

Méthode pour optimaliser un système de cogénération à pile à combustible

(84) Benannte Vertragsstaaten:
**AT BE BG CH CY CZ DE DK EE ES FI FR GB GR IE IT LI LU MC NL PT SE SI SK TR**

(30) Priorität: **17.12.2001 AT 19672001**

(43) Veröffentlichungstag der Anmeldung:
**18.06.2003 Patentblatt 2003/25**

(73) Patentinhaber: **Vaillant GmbH**
**42859 Remscheid (DE)**

(72) Erfinder:
• **Götz, Klaus**
**42653 Solingen (DE)**
• **Noll, Wolfgang**
**42369 Wuppertal (DE)**
• **Thomas, Rolf**
**42929 Wermelskirchen (DE)**

(74) Vertreter: **Hocker, Thomas**
**Vaillant GmbH**
**Berghauser Strasse 40**
**42859 Remscheid (DE)**

(56) Entgegenhaltungen:
**EP-A2- 1 056 148    DE-A1- 2 637 482**

EP 1 319 899 B1

**Beschreibung**

Die Erfindung bezieht sich auf ein Verfahren zum optimierten Betrieb einer Anlage zur gleichzeitigen Erzeugung von elektrischer und thermischer Energie mit einem Brennstoffzellenheizgerät in Verbindung mit einer Vorrichtung zum Speichern von thermischer Energie.

Brennstoffzellenanlagen, welche über einen Reformer mit wasserstoffreichem Brenngas versorgt werden, sollten möglichst nicht taktend, sondern vielmehr mit langen Laufzeiten betrieben werden, da das Anfahren der Anlage den Verschleiß des Reformers fördert und mit Energieverlusten behaftet ist.

Da nicht stets eine konstante Energiemenge benötigt wird, kann ein Abschalten dadurch vermieden werden, dass die Anlage temporär modulierend, d.h. mit Teillast betrieben wird. Da jedoch das Verhältnis zwischen angeforderter Wärme und angefordertem Strom nicht konstant ist, muss die nicht benötigte Energie abgeführt oder zwischengespeichert werden. Stromspeicher sind zur Zeit nicht wirtschaftlich, so dass man bei Brennstoffzellenanlagen überschüssigen Strom in der Regel in das Netz einspeist. Demgegenüber kann Wärme leicht mit handelsüblichen Warmwasserspeichern gespeichert werden.

Aus der EP 1 098 142 A2 D1 ist eine Brennstoffzellenanlage mit konventionellem Warmwasserspeicher bekannt. Zum Erhitzen des Wassers wird ein Wärmeaustauscher innerhalb des Speichers durchströmt. Das Wasser um den Wärmeaustauscher innerhalb des Speichers wird erwärmt. Da warmes Wasser nach oben steigt und der Wärmeaustauscher sich im unteren Teil des Speichers befindet, findet eine mehr oder minder homogene Erwärmung des Wassers im Speicher statt. Eine Temperaturschichtung kann nicht erfolgen. Muss Warmwasser auf einem bestimmten Temperaturniveau aufgrund von Komfort- und Hygieneanforderungen gehalten werden, so ist das weitere thermische Speicherungsvermögen stark eingeschränkt.

Auch aus der EP 1 056 148 ist bekannt, dass die Abwärme eines Brennstoffzellensystems in einem Warmwasserspeicher gespeichert werden kann. EP 1056 148 offenbart ein Verfahren nach dem Oberbegriff des Ansprunch 1. Die DE 26 37 482 zeigt einen Warmwasserspeicher mit Temperatursensoren auf verschiedenen Höhenniveaus.

Bei Warmwasserspeichern gibt es Schichtenspeicher, welche sich dadurch auszeichnen, dass das Temperaturniveau von oben nach unten abnimmt. Brauchwasserschichtenspeicher werden von unten mit kaltem Brauchwasser befüllt. Derartige Speicher sind beispielsweise aus der DE 43 01 144 A1 bekannt. Aus dem unteren Bereich wird kühles Wasser entnommen, einer Heizeinrichtung zugeführt, dort erhitzt und dem oberen Bereich des Speichers wieder zugeführt. Hierduch entsteht - insbesondere bei geringen Turbulenzen oben - genannte Temperaturschichtung. Warmes Brauchwasser kann dem oberen Bereich des Speichers entnommen werden.

Konventionelle Schichtenspeicher werden gemäß dem mutmaßlichen Warmwasserbedarf der Nutzer dimensioniert und auf einem Temperaturniveau gehalten, welches den Hygieneanforderungen (z.B. Vermeidung von Legionellenbildung) und dem Komfortbedarf entspricht. DIN 4708 Teil 3 sieht vor, dass die Warmwasser-Spitzenzapfleistung für 10 Minuten bevorratet wird.

In der JP 2000319007 ist ein Reformer für Brennstoffellen beschreiben, bei dem ein Warmwasserspeicher zum Erhitzen des Reformers beim Start benutzt wird. Aus der JP 2001135321 und JP 11097044 ist bekannt, dass eine Kraft-Wärme-Kopplungsanlage mit Brennstoffzellen mit Warmwasserspeicher zum Speichern thermischer Energie gekoppelt werden kann.

Bei Brennstoffzellenanlagen sind große Wärmespeicher erforderlich, um viel Wärme speichern zu können, damit die Anlage auch dann betrieben werden kann, wenn temporär keine Wärme benötigt wird.

Hieraus ergibt sich, dass mit einem konventionellen Schichtenspeicher und den üblichen Ladeverfahren eines Schichtenspeichers der Konflikt zwischen einem großen Speichervolumen und der Bevorratung einer an den Benutzererfordernissen orientierten heißen Brauchwassermenge nicht gelöst werden kann.

Ziel der Erfindung ist es, diesen Nachteil zu vermeiden und ein Verfahren zum Betreiben einer Anlage zur gleichzeitigen Erzeugung von elektrischer und thermischer Energie mit einem Brennstoffzellenheizgerät und einer Vorrichtung zum Speichern von thermischer Energie der eingangs erwähnten Art vorzuschlagen, das sich durch hohe Aufnahmefähigkeit von thermischer Energie bei gleichzeitig hohem Temperaturniveau des zur Verfügung stehenden Brauch- und Warmwassers auszeichnet.

Erfindungsgemäß wird dies bei einem Verfahren gemäß dem unabhängigen Anspruch 1 dadurch erreicht, dass die Leistungsregelung des Brennstoffzellenheizgerätes und gegebenenfalls des Zusatzheizgerätes in Abhängigkeit der Temperatur zweier Sensoren, die sich auf unterschiedlichem Höhenniveau im Speicher befinden, erfolgt. Das Brennstoffzellenheizgerät kann unter bestimmten Voraussetzungen, die mittels dieser zwei Sensoren gemessen werden, mit beliebiger Leistung betrieben werden. Es wird zugleich eine rasche Speicherladung des obersten Speicherbereichs erzielt wird, wodurch den Komfort- und Hygieneanforderungen gerecht wird. Letztendlich wird auch erreicht, dass das Brennstoffzellenheizgerät möglichst nicht in den taktenden Betrieb übergehen muss.

Durch die Merkmale des Anspruchs 2 wird erreicht, dass für die Regelung nur eine Solltemperatur für die beiden Temperatursensoren im Schichtenspeicher verwendet wird, was den Aufwand für die Regelung minimiert.

Gemäß den Merkmalen des Anspruchs 3 ergibt sich der Vorteil, dass die Regelung optimiert bezüglich langer Laufzeiten der Brennstoffzelle arbeiten kann.

Durch die Merkmale des Anspruchs 4 wird erreicht, dass das Brennstoffzellenheizgerät abschaltet, sobald der Schichtenspeicher keine Wärme mehr aufnehmen kann.

Eine optimierte Dimensionierung des Schichtenspeichers mit entsprechender Positionierung der Temperatursensoren ist für das Verfahren notwendig. Während die beiden oberen Teilvolumina bzw. die Position der Temperatursensoren gemäß Norm dimensioniert werden, wird das untere Teilvolumen derartig dimensioniert, dass die Brennstoffzelle relativ lange mit Minimallast betrieben werden kann, um ein Abschalten zu verhindern. Grundlage hierfür bietet die Formel:

$$V = \frac{P_{min} * t}{\rho * c * (T_{max} - T_{min})}$$

Hierbei sind V das Speichervolumen unterhalb des unteren Temperatursensors, $P_{min}$ die minimale thermische Brennstoffzellenleistung, t die gewünschte Betriebszeit, p die Wasserdichte, c die spezifische Wärmekapazität, $T_{max}$ die maximale Speichertemperatur und $T_{min}$ die minimale Speichertemperatur. Hierbei ist zu beachten, dass $T_{min}$ mindestens der Kaltwassereintrittstemperatur entspricht; aufgrund der konvektiven Wärmeübertragung im Speicher sollte man in der Praxis jedoch von einem höheren Wert - beispielsweise 25°C - ausgehen.

Die Erfindung wird nun anhand der Zeichnung näher erläutert. Dabei zeigt

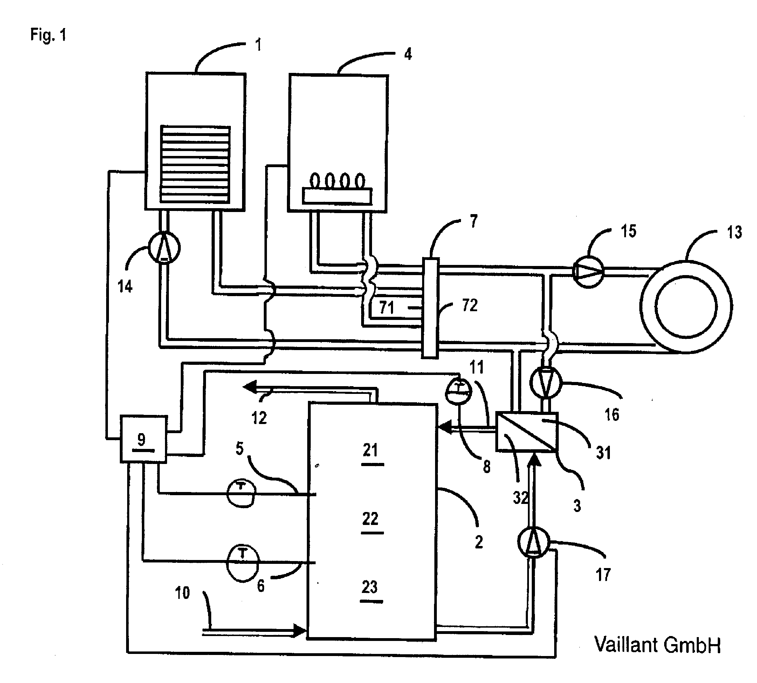

    Fig. 1 eine Heizungsanlage mit Brennstoffzellenheizgerät, Zusatzheizgerät, Heiznetz und Warmwasserschichtenspeichern zur Durchführung des erfindungsgemäßen Verfahrens.

Figur 1 zeigt ein Brennstoffzellenheizgerät 1, das mit einer hydraulischen Weiche 7 auf deren Primärseite 71 verbunden ist. Eine Pumpe 14 ist für das Fördern von Wärmeträgermedium durch das Brennstoffzellenheizgerät 1 vorhanden. An die hydraulische Weiche 7 ist auf der Primärseite 71 auch ein Zusatzheizgerät 4 parallel zu dem Brennstoffzellenheizgerät 1 angeschlossen. Auf der Sekundärseite 72 der hydraulischen Weiche 7 sind parallel ein Heiznetz 13 und die Primärseite 31 eines Wärmeaustauscher 3 jeweils mit eigener Umwälzpumpe 15, 16 angeschlossen.

Ein Schichtenspeicher 2 verfügt über einen Brauchwassereintritt 10 am Grund des Schichtenspeichers 2 und einen Brauchwasseraustritt 12 im obersten Bereich. Der Schichtenspeicher 2 wird - nicht baulich, sondern vielmehr gewillkürt - durch zwei Temperatursensoren 5, 6 auf unterschiedlichen Höhenniveaus in drei Zonen eingeteilt. Das untere Speichervolumen 23 reicht vom Grund bis zum unteren Temperatursensor 6; das mittlere Speichervolumen 22 vom unteren Temperatursensor 6 zum oben Temperatursensor 5 und das obere Speichervolumen 21 vom oben Temperatursensor 5 bis zum oberen Ende des Schichtenspeichers 2. Aus dem unteren Speichervolumen 23 führt eine Verbindungsleitung über eine Umwälzpumpe 17 zur Sekundärseite 32 des Wärmeaustauschers 3 und von dort über eine Speicherladeleitung 11 wieder in den obersten Bereich des Schichtenspeichers 2. In der Speicherladeleitung 11 befindet sich ein Temperatursensor 8.

Eine Regelung 9 ist mit den Temperatursensoren 5, 6 und 8, der Drehzahlmessung der Umwälzpumpe 17 sowie dem Brennstoffzellenheizgerät 1 und dem Zusatzheizgerät 4 verbunden.

Wird der Schichtenspeicher 2 aus dem kalten Zustand geladen, so werden das Brennstoffzellenheizgerät 1 und das Zusatzheizgerät 4 mit voller Leistung betrieben. Über die hydraulische Weiche 7 wird die Wärme an den Wärmeaustauscher 3 weitergeleitet. Aus dem unteren Bereich des Schichtenspeichers 2 wird kaltes Wasser abgesaugt und über die Umwälzpumpe 17 dem Wärmetauscher 3 zugeführt, wo das Wasser erwärmt wird und anschließend über die Speicherladeleitung 11 in den obersten Bereich des Schichtenspeichers 2 gelangt. Hierdurch steigen die gemessenen Temperaturen an den Temperatursensoren 5 und 6. Überschreitet die Temperatur am oberen Temperatursensor 5 eine vorgegebene Solltemperatur, so realisiert die Regelung 9 dies und schaltet das Zusatzheizgerät 4 ab. Nun ist im oberen Speichervolumen 21 Warmwasser gemäß DIN 4708 Teil 3 bevorratet. Nun kann das Brennstoffzellenheizgerät 1 derart betrieben werden, dass beispielsweise die Brennstoffzelle stromgeführt betrieben wird. Dies bedeutet, dass die Brennstoffzelle soviel Strom produziert, wie ein Verbraucher von ihr fordert. Hierbei produziert die Brennstoffzelle gleichzeitig eine proportionale Wärmemenge, die zum Laden des Schichtenspeichers 2 genutzt wird. Überschreitet die Temperatur am unteren Temperatursensor 6 einen vorgegebenen Sollwert, der dem o.g. Sollwert beim Temperatursensor 5 entsprechen kann, so ist vorrangiges Ziel der Regelung 9 die Laufzeit des Brennstoffzellenheizgerätes 1 zu maximieren. Daher regelt die Regelung 9 die Leistung des Brennstoffzellenheizgerätes 1 auf minimale Leistung. Aufgrund der Temperaturmessung am Temperatursensor 8 in Verbindung mit der Drehzahlerfassung der Umwälzpumpe 17 und dem unteren Temperatursensor 6 erkennt die Regelung, wann der Schichtenspeicher 2 keine Wärme mehr aufnehmen kann und schaltet das Brennstoffzellenheizgerät 1 ab.

Bezugszeichenliste

| | |
|---|---|
| 1 | Brennstoffzellenheizgerät |
| 2 | Schichtenspeicher |
| 3 | |
| 4 | Zusatzheizgerät |

| 5 | Temperatursensor |
|---|---|
| 6 | Temperatursensor |
| 7 | Hydraulische Weiche |
| 8 | Temperatursensor |
| 9 | Regelung |
| 10 | Brauchwassereintritt |
| 11 | Speicherladeleitung |
| 12 | Brauchwasseraustritt |
| 13 | Heiznetz |
| 14 | Umwälzpumpe |
| 15 | Umwälzpumpe |
| 16 | Umwälzpumpe |
| 17 | Umwälzpumpe |
| 21 | Oberes Speichervolumen |
| 22 | Mittleres Speichervolumen |
| 23 | Unteres Speichervolumen |
| 31 | Primärseite |
| 32 | Sekundärseite |
| 71 | Primärseite |
| 72 | Sekundärseite |

## Patentansprüche

1. Verfahren zum Betreiben einer Anlage zur gleichzeitigen Erzeugung von elektrischer und thermischer Energie mit einem Brennstoffzellenheizgerät (1), vorzugsweise mit Reformer zur Herstellung von wasserstoffreichem Prozessgas aus Kohlenwasserstoffen, einem Schichtenspeicher (2) zum Speichern von thermischer Energie, wobei aus dem unteren Speichervolumen (23) eine Verbindungsleitung über eine Umwälzpumpe (17) zur Sekundärseite (32) eines Wärmeaustauschers (3) und von dort über eine Speicherladeleitung (11) wieder in den obersten Bereich des Schichtenspeichers (2) führt, wobei Wärmeträgermedium von dem Brennstoffzellenheizgerät (1) und gegebenenfalls dem Zusatzheizgerät (4) zur Primärseite des Wärmeaustauschers (3) gefördert wird, **dadurch gekennzeichnet, dass** mindestens zwei Temperatursensoren (5, 6) auf unterschiedlichem Höhenniveau im Schichtenspeicher (2), und optional einem Zusatzheizgerät (4) vorhanden sind dass die Leistungsregelung des Brennstoffzellenheizgerätes (1) und gegebenenfalls des Zusatzheizgerätes (4) in Abhängigkeit von der Temperatur der Temperatursensoren (5, 6) im Schichtenspeicher (2) erfolgt, wobei das Brennstoffzellenheizgerät (1) und gegebenenfalls das Zusatzheizgerätes (4) mit hoher Leistung, vorzugsweise Volllast betrieben werden, wenn die Temperatur am oberen Temperatursensor (5) niedriger als eine vorgegebene erste Solltemperatur $T_{Soll,1}$ ist, das Brennstoffzellenheizgerät (1) mit einer beliebigen Leistung zwischen Volllast und Minimallast, vorzugsweise gemäß einer elektrischen Sollleistung betrieben wird und das gegebenenfalls vorhandene Zusatzheizgerät (4) keine Leistung abgibt, wenn die Temperatur am oberen Temperatursensor (5) höher als eine vorgegebene ersten Solltemperatur $T_{Soll,1}$ und die Temperatur am unteren Temperatursensor (6) niedriger als eine vorgegebene zweite Solltemperatur $T_{Soll,2}$ ist und / oder das Brennstoffzellenheizgerät (1) mit einer kleinen Leistung, vorzugsweise Minimallast betrieben wird und das gegebenenfalls vorhandene Zusatzheizgerät (4) keine Leistung abgibt, wenn die Temperatur am unteren Temperatursensor (6) höher als eine vorgegebene zweite Solltemperatur $T_{Soll,2}$ ist.

2. Verfahren gemäß Anspruch 1, **dadurch gekennzeichnet, dass** die erste Solltemperatur $T_{Soll,1}$ der zweiten Solltemperatur $T_{Soll,2}$ entspricht.

3. Verfahren gemäß Anspruch 1, **dadurch gekennzeichnet, dass** die erste Solltemperatur $T_{Soll,1}$ größer als die zweite Solltemperatur $T_{Soll,2}$ ist.

4. Verfahren gemäß einem der Ansprüche 1 bis 3, **dadurch gekennzeichnet, dass** das Brennstoffzellenheizgerät (1) abgeschaltet wird, wenn die Temperatur an einem Temperatursensor (8) in der Speicherladeleitung (11) höher als eine vorgegebene dritte Solltemperatur $T_{Soll,3}$, die höher als die erste Solltemperatur $T_{Soll,1}$ ist, ist.

## Claims

1. Method to operate a plant for the simultaneous generation of electrical and thermal energy having a fuel cell heating appliance (1), preferably having a reformer to produce hydrogen-rich process gas from hydrocarbons, a stratified storage tank (2) to store thermal energy, wherein a connecting line leads from the lower storage volume (23) via a circulation pump (17) to the secondary side (32) of a heat exchanger (3) and from there via a storage charging line (11) back into the uppermost region of the stratified storage tank (2), wherein heat transfer medium is driven from the fuel cell heating appliance (1), and if necessary from the additional heating appliance (4), to the primary side of the heat exchanger (3), **characterised in that** at least two temperature sensors (5, 6), and optionally an additional heating appliance (4), are present at different height levels in the stratified storage tank (2), that the power control of the fuel cell heating appliance (1), and if necessary of the additionally heating appliance (4), occurs depending on the temperature of the temperature sensors (5, 6) in the stratified storage tank (2), wherein the fuel cell heating appliance (1), and if necessary the additional heating appliance (4), are operated at a higher power, preferably full power, if the temperature at the upper temperature sensor (5) is lower than a predetermined first target temperature $T_{Soll,1}$,

the fuel cell heating appliance (1) is operated at an optional power between full power and minimum power, preferably according to an electrical target power, and the additional heating appliance (4), which is present if necessary, does not emit any power, if the temperature at the upper temperature sensor (5) is higher than a predetermined first target temperature $T_{Soll,1}$ and the temperature at the lower temperature sensor (6) is lower than a predetermined second target temperature $T_{Soll,2}$, and/or the fuel cell heating appliance (1) is operated at a low power, preferably minimum power, and the additional heating appliance (4), which is present if necessary, does not emit any power, if the temperature of the lower temperature sensor (6) is higher than a predetermined second target temperature $T_{Soll,2}$.

2. Method according to claim 1, **characterised in that** the first target temperature $T_{Soll,1}$ corresponds to the second target temperature $T_{Soll,2}$.

3. Method according to claim 1, **characterised in that** the first target temperature $T_{Soll,1}$ is larger than the second target temperature $T_{Soll,2}$.

4. Method according to one of claims 1 to 3, **characterised in that** the fuel cell heating appliance (1) is switched off, if the temperature at a temperature sensor (8) in the storage charging line (11) is higher than a predetermined third target temperature $T_{Soll,3}$, which is higher than the first target temperature $T_{Soll,1}$.

**Revendications**

1. Procédé d'entraînement d'un dispositif destiné à produire simultanément de l'énergie électrique et de l'énergie thermique doté d'un chauffage à cellule électrochimique (1), de préférence avec un reformeur destiné à produire un gaz de procédé riche en hydrogène à partir d'hydrocarbures, d'un réservoir à couches (2) destiné à conserver l'énergie thermique, moyennant quoi un circuit de liaison part du volume inférieur du réservoir (23), passe par une pompe de circulation (17) et va jusqu'au côté secondaire (32) d'un échangeur thermique (3) et de là, traverse un circuit de charge du réservoir (11) et revient dans la partie supérieure du réservoir à couches (2), moyennant quoi un agent caloporteur circule du chauffage à cellule électrochimique (1) et le cas échéant du chauffage auxiliaire (4) vers le côté primaire de l'échangeur thermique (3), **caractérisé en ce que** deux capteurs de température (5, 6) au moins sont disposés sur un niveau différent du réservoir à couches (2) et **en ce qu'**un chauffage auxiliaire (4) facultatif existe, **en ce que** le réglage de la puissance du chauffage à cellule électrochimique (1)

et le cas échéant, du chauffage auxiliaire (4) a lieu en fonction de la température des capteurs de température (5, 6) dans le réservoir à couches (2), moyennant quoi le chauffage à cellule électrochimique (1), et le cas échéant le chauffage auxiliaire (4), fonctionne avec une plus grande puissance, de préférence à pleine puissance, si la température du capteur de température supérieur (5) est inférieure à une première température théorique prédéfinie $T_{Soll,1}$,

le chauffage à cellule électrochimique (1) fonctionne avec une puissance librement définie comprise entre la pleine puissance et une puissance minimum, de préférence en fonction d'une puissance théorique électrique, et le chauffage auxiliaire (4) existant le cas échéant ne produit aucune puissance si la température du capteur de température supérieur (5) est supérieure à une première température théorique prédéfinie $T_{Soll,1}$ et si la température du capteur de température inférieur (6) est inférieure à une seconde température théorique prédéfinie $T_{Soll2}$ et / ou

le chauffage à cellule électrochimique (1) fonctionne avec une faible puissance, de préférence une puissance minimum, et le chauffage auxiliaire (4) existant le cas échant ne produit aucune puissance, si la température du capteur de température inférieur (6) est supérieure à une deuxième température théorique prédéfinie $T_{Soll,\,2}$.

2. Procédé selon la revendication 1, **caractérisé en ce que** la première température théorique $T_{Soll,1}$ correspond à la deuxième température $T_{Soll,2}$.

3. Procédé selon la revendication 1, **caractérisé en ce que** la première température théorique $T_{Soll,1}$ est supérieure à la deuxième température théorique $T_{soll,\,2}$.

4. Procédé selon l'une quelconque des revendications 1 à 3, **caractérisé en ce que** le chauffage à cellule électrochimique (1) s'arrête si la température d'un capteur de température (8) du circuit de charge du réservoir (11) est supérieure à une troisième température théorique prédéfinie $T_{Soll,\,3}$, laquelle est supérieure à la première température théorique $T_{Soll,1}$.

Fig. 1

Vaillant GmbH

EP 1 319 899 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1098142 A2
- EP 1056148 A
- DE 2637482
- DE 4301144 A1

- JP 2000319007 B
- JP 2001135321 B
- JP 11097044 B